# EUROPÄISCHE PATENTSCHRIFT

(11) **EP 3 113 461 B1**
(45) Veröffentlichungstag und Bekanntmachung des Hinweises auf die Patenterteilung: **20.03.2019**
(21) Anmeldenummer: 15174598.1
(22) Anmeldetag: 30.06.2015
(51) Int. Cl.: H04L 29/14, G05B 19/418, H04L 29/12, H04L 29/06, H04L 12/24

(54) **VERFAHREN ZUM AUFBAU VON KOMMUNIKATIONSVERBINDUNGEN ZU REDUNDANT BETRIEBENEN STEUERUNGSGERÄTEN EINES INDUSTRIELLEN AUTOMATISIERUNGSSYSTEMS UND STEUERUNGSGERÄT**
METHOD FOR ESTABLISHING COMMUNICATION LINKS TO REDUNDANT CONTROL DEVICES OF AN INDUSTRIAL AUTOMATION SYSTEM AND CONTROL APPARATUS
PROCÉDÉ D'ÉTABLISSEMENT DE LIAISONS DE COMMUNICATION À DES APPAREILS DE COMMANDE À FONCTIONNEMENT REDONDANT D'UN SYSTÈME D'AUTOMATISATION INDUSTRIELLE ET APPAREIL DE COMMANDE

(43) Veröffentlichungstag der Anmeldung: 04.01.2017
(73) Patentinhaber: Siemens Aktiengesellschaft, 80333 München (DE)
(72) Erfinder: Albrecht, Harald, 90475 Nürnberg (DE); Landgraf, Ingo, 90765 Fürth-Poppenreuth (DE)

(56) Entgegenhaltungen:
- DE-A1-102006 027 683
- US-A1- 2008 320 582
- US-A1- 2011 202 669

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

EP 3 041 199 A1 betrifft ein Verfahren zur Ermittlung von Kommunikationsgeräteadressen innerhalb eines Kommunikationsnetzes eines industriellen Automatisierungssystems. Ausgewählten Kommunikationsgeräten des industriellen Automatisierungssystems ist jeweils eine Speichereinheit zugeordnet, in der jeweils zumindest ein Teil von Namensdienst-Informationen temporär gespeichert wird, die durch einen Kommunikationsnetz-Namensdienst bereitgestellt werden. Ein Verbindungsaufbau von einem ersten ausgewählten Kommunikationsgerät zu einem zweiten Kommunikationsgerät wird bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Die Anwendung bzw. Funktion löst bei einem fehlgeschlagenen Verbindungsaufbauversuch eine zumindest teilweise Aktualisierung der temporär gespeicherten Namensdienst-Informationen aus.

In EP 3 059 930 A1 ist ein Verfahren zur Konfiguration eines Kommunikationsgeräts eines industriellen Automatisierungssystems beschrieben. Dabei wird aus zumindest einem mittels Routerbekanntgabe-Nachrichten durch zumindest einen innerhalb eines Teilnetzes zugeordneten Router übermittelten Präfix und aus einem geräteindividuellen Schnittstellenidentifikator selbständig eine dem Kommunikationsgerät zugeordnete Kommunikationsnetzadresse erzeugt. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich jedoch nur die beim Server des Namensdienst-Systems abgefragten Kommunikationsnetzadressen zu, die eine Übereinstimmung mit dem durch den Router übermittelten Präfix aufweisen.

Aus US 2011/202669 A1 ist bekannt, dass als Ergebnis einer Namensauflösungsanfrage zu einem Gerätenamen eines redundanten Steuerungssystems die IP-Adresse des jeweils aktiven von mehreren zueinander redundanten Steuerungsgeräten geliefert wird. Dabei ist sämtlichen zueinander redundanten Steuerungsgeräten derselbe Gerätename zugeordnet, so dass ein DNS Resource Record eine Vielzahl von zugeordneten IP-Adressen umfasst. Dabei ist die IP-Adresse des jeweils aktiven Steuerungsgeräts als "operating" gekennzeichnet ist, während die anderen IP-Adressen als "standby" gekennzeichnet sind. Somit werden Informationen zu aktiven und Standby-betriebenen Steuerungsgeräten einer redundanten Steuerung in einem oder mehreren DNS-Servern zusammengefasst, wobei sämtlichen Steuerungsgeräten einer redundanten Steuerung dort derselbe Gerätename zugeordnet ist.

Bei hochverfügbaren Steuerungen sind zwei speicherprogrammierbare Steuerungen derart logisch miteinander gekoppelt, dass sie identische Anwenderprogramme im wesentlichen synchron ausführen. Hierbei hat üblicherweise eine speicherprogrammierbare Steuerung, die in einem aktiven Betriebszustand zur Steuerung oder Regelung eines technischen Prozesses ist, als Haupt-Steuerungsgerät eine führende Rolle, während die andere speicherprogrammierbare Steuerung als Reserve-Steuerungsgerät Anwenderprogramme mit einem vorgegebenen Zeitverzug ausführt. Fällt in einer hochverfügbaren Steuerung eine der beiden speicherprogrammierbaren Steuerungen aus, erfolgt durch die verbleibende speicherprogrammierbare Steuerung weiterhin eine Ausführung der Anwenderprogramme.

Grundsätzlich ist eine hochverfügbare Steuerung eher virtuell gebildet, und zwar durch Zusammenwirken der beiden von der hochverfügbaren Steuerung umfassten speicherprogrammierbaren Steuerungen. Dabei ist der hochverfügbaren Steuerung im Gegensatz zu den beiden speicherprogrammierbaren Steuerungen kein Gerätename zugeordnet. Soll beispielsweise ein Zugriff von einem Bedien- und Überwachungsgerät auf eine hochverfügbare Steuerung erfolgen, ist hierfür üblicherweise ein Aufbau jeweils einer Transport-Verbindung zu jeder der beiden speicherprogrammierbaren Steuerungen erforderlich. Idealerweise sollte hierfür keine explizite Identifizierung der beiden Transport-Verbindungen erforderlich sein. Vielmehr ist ein Aufbau einer Verbindung zu einer hochverfügbaren Steuerung auf logischer Ebene sinnvoll.

Um eine Verbindung zu einer hochverfügbaren Steuerung aufzubauen, könnten grundsätzlich die Transport-Verbindungen zu den beiden speicherprogrammierbaren Steuerungen einzeln projektiert werden. Dies ist jedoch relativ unbequem und zudem fehleranfällig. Eine andere Möglichkeit für einen Aufbau einer Verbindung zu einer hochverfügbaren Steuerung bestünde in einer Verwendung einer zusätzlichen umherziehenden Kommunikationsnetzadresse, die stets auf das aktuelle Haupt-Steuerungsgerät verweist. Problematisch bei einer derartigen Lösung ist, dass Adressänderungen auch in einem Domain Name System zeitnah nachgeführt werden sollten. Üblicherweise werden entsprechende Änderungen in einem Domain Name System erst mit mehrminütigen Verspätungen umgesetzt. Ein Aufbau einer Verbindung zu einer hochverfügbaren Steuerung könnte entsprechend einer weiteren Alternative auch durch Verwendung eines zusätzlichen umherziehenden Gerätenamens gelöst werden, der stets auf das aktuelle Haupt-Steuerungsgerät verweist. Allerdings ist auch hier problematisch, dass Änderungen in einem Domain Name System erst mit mehrminütigen Verspätungen umgesetzt werden.

Der vorliegenden Erfindung liegt die Aufgabe zugrunde, ein zuverlässiges und einfach zu realisierendes Verfahren zum Aufbau von Kommunikationsverbindungen zu redundant betriebenen Steuerungsgeräten einer hochverfügbaren Steuerung zu schaffen und geeignete Steuerungsgeräte zur Durchführung des Verfahrens anzugeben.

Diese Aufgabe wird erfindungsgemäß durch ein Verfahren mit den in Anspruch 1 angegebenen Merkmalen und durch ein Steuerungsgerät mit den in Anspruch 13 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Aufbau von Kommunikationsverbindungen zu redundant betriebenen Steuerungsgeräten eines industriellen Automatisierungssystems ist ein erstes Steuerungsgerät in einem aktiven Betriebszustand zur Steuerung oder Regelung eines technischen Prozesses. Dagegen ist ein zweites Steuerungsgerät in einem Reserve-Betriebszustand, aus dem es bei einem Ausfall des ersten Steuerungsgeräts in einen aktiven Betriebszustand versetzbar ist. Im ersten Steuerungsgerät wird ein dem zweiten Steuerungsgerät zugeordneter symbolischer Gerätename gespeichert. In entsprechender Weise wird im zweiten Steuerungsgerät ein dem ersten Steuerungsgerät zugeordneter symbolischer Gerätename gespeichert. Die symbolischen Gerätenamen werden jeweils in DCP-Variablen entsprechend Discovery and Basic Configuration Protocol oder als zusätzliche DNS Resource Records im jeweils anderen Steuerungsgerät gespeichert. Ein Steuerungsgerät in einem Reserve-Betriebszustand simuliert vorzugsweise die Steuerung oder Regelung des technischen Prozesses, der durch das Steuerungsgerät im aktiven Betriebszustand gesteuert oder geregelt wird. Dabei kann eine Simulation mit einem vorgegebenen Zeitverzug zu einer Steuerung oder Regelung eines technischen Prozesses erfolgen.

Erfindungsgemäß werden Informationen über Zuordnungen zwischen Gerätenamen und Kommunikationsnetzadressen des ersten und des zweiten Steuerungsgeräts entsprechend einem Namensdienstprotokoll zumindest innerhalb eines dem ersten bzw. zweiten Steuerungsgerät zugeordneten Teilnetzes bereitgestellt. Bei Abruf einer Adress- oder Namensinformation eines der beiden Steuerungsgeräte wird automatisch eine Adress-oder Namensinformation für einen Aufbau einer Kommunikationsverbindung zum jeweils anderen Steuerungsgerät anhand des jeweiligen symbolischen Gerätenamens bereitgestellt. Insbesondere kann anhand eines symbolischen Gerätenamens eine Kommunikationsnetzadresse für einen Aufbau einer Kommunikationsverbindung, die entsprechend Transmission Control Protocol aufgebaut wird, zu einem Steuerungsgerät ermittelt werden.

Der Abruf der Adress- oder Namensinformation erfolgt erfindungsgemäß im Rahmen einer Benutzerauswahl oder -identifizierung eines der beiden Steuerungsgeräte. Die Adress- oder Namensinformation zum jeweils anderen Steuerungsgerät wird durch Auslesen der DCP-Variable, die auf das jeweils andere Steuerungsgerät verweist, oder durch Auslesen des DNS Resource Record bereitgestellt, der auf das jeweils andere Steuerungsgerät verweist. Anhand des jeweiligen Geräteidentifikators wird eine Kommunikationsverbindung zu dem Steuerungsgerät aufgebaut, das im aktiven Betriebszustand ist. Damit ist anwenderseitig keine Kenntnis erforderlich, welches Steuerungsgerät einer hochverfügbaren Steuerung in einem aktiven Betriebszustand ist. Da Gerätenamen und -adressen beider Steuerungsgeräte automatisch in einem Domain Name System erfasst werden können, werden Projektierungsaufwände und Fehlerquellen reduziert.

Entsprechend einer bevorzugten Ausgestaltung des erfindungsgemäßen Verfahrens sind die Kommunikationsnetzadressen des ersten und des zweiten Steuerungsgeräts IPv6-Adressen. Dementsprechend erzeugen das erste und das zweite Steuerungsgerät jeweils selbständig ihre IPv6-Adressen. Damit ist auch keine Planung von Kommunikationsnetzadressen erforderlich, so dass Projektierungs- und Inbetriebnahmeaufwände weiter reduziert werden können.

Die Informationen über Zuordnungen zwischen Gerätenamen und Kommunikationsnetzadressen des ersten und des zweiten Steuerungsgeräts können beispielsweise entsprechend Discovery and Basic Configuration Protocol (DCP), das im Kontext von PROFINET standardisiert ist, bereitgestellt werden. Vorteilhafterweise werden die im ersten Steuerungsgerät und im zweiten Steuerungsgerät gespeicherten DCP-Variablen entsprechend Discovery and Basic Configuration Protocol mittels korrespondierender Dienstkomponenten für das Discovery and Basic Configuration Protocol an weitere Automatisierungs- oder Kommunikationsgeräte bereitgestellt.

Vorzugsweise wird bei einer Identifizierung des ersten Steuerungsgeräts mittels Discovery and Basic Configuration Protocol automatisch die dort hinterlegte DCP-Variable ausgelesen, in welcher der dem zweiten Steuerungsgerät zugeordnete symbolische Gerätename gespeichert ist. In entsprechender Weise wird auch bei einer Identifizierung des zweiten Steuerungsgeräts mittels Discovery and Basic Configuration Protocol automatisch die dort hinterlegte DCP-Variable ausgelesen, in welcher der dem ersten Steuerungsgerät zugeordnete symbolische Gerätename gespeichert ist.

Entsprechend einer weiteren Ausführungsform der vorliegenden Erfindung werden die Informationen über Zuordnungen zwischen Gerätenamen und Kommunikationsnetzadressen des ersten und des zweiten Steuerungsgeräts mittels eines Domain Name System bzw. entsprechend Multicast DNS Protokoll bereitgestellt. Darüber hinaus umfassen das erste und das zweite Steuerungsgerät vorzugsweise jeweils eine Dienstkomponente für dynamisches DNS oder für Multicast DNS, mittels der sie neben Informationen über ihren eigenen Gerätenamen und ihre eigene Kommunikationsnetzadresse den symbolischen Gerätenamen verbreiten, der dem jeweils anderen Steuerungsgerät zugeordnet ist. Auf diese Weise können neben den Informationen über Zuordnungen zwischen Gerätenamen und Kommunikationsnetzadressen des ersten und des zweiten Steuerungsgeräts auch die symbolischen Gerätenamen in zumindest einem DNS-Server abrufbar gespeichert werden. Dabei werden die symbolischen Gerätenamen im DNS-Server vorteilhafterweise als zusätzliche Resource Records gespeichert, die bei einer Adress- oder Namensauflösungsanfrage als zusätzliche Informationen bereitgestellt werden.

Das erfindungsgemäße Steuerungsgerät eines industriellen Automatisierungssystems ist zur Durchführung eines Verfahrens entsprechend vorangehenden Ausführungen geeignet und umfasst eine Steuerungseinheit zur Steuerung oder Regelung eines technischen Prozesses. Die Steuerungseinheit dazu ausgestaltet und eingerichtet, zwischen einem aktiven Betriebszustand und einem Reserve-Betriebszustand umgeschaltet zu werden. Außerdem umfasst das erfindungsgemäße Steuerungsgerät eine Speichereinheit, in der ein symbolischer Gerätename eines zugeordneten Haupt- oder Reserve-Steuerungsgeräts in einer DCP-Variable entsprechend Discovery and Basic Configuration Protocol oder als zusätzlicher DNS Resource Record gespeichert ist.

Erfindungsgemäß ist das Steuerungsgerät dazu ausgestaltet und eingerichtet, dass Informationen über Zuordnungen zwischen Gerätenamen und Kommunikationsnetzadressen entsprechend einem Namensdienstprotokoll zumindest innerhalb eines zugeordneten Teilnetzes bereitgestellt werden. Zusätzlich ist das Steuerungsgerät dazu ausgestaltet und eingerichtet, dass bei Abruf einer Adress- oder Namensinformation eines Haupt- oder Reserve-Steuerungsgeräts automatisch eine Adress-oder Namensinformation für einen Aufbau einer Kommunikationsverbindung zu einem zugeordneten Reserve- oder Haupt-Steuerungsgerät anhand des jeweiligen symbolischen Gerätenamens bereitgestellt wird. Dabei erfolgt der Abruf der Adress- oder Namensinformation im Rahmen einer Benutzerauswahl oder -identifizierung des Reserve- oder Haupt-Steuerungsgeräts.

Das Steuerungsgerät ist erfindungsgemäß zusätzlich dazu ausgestaltet und eingerichtet, dass die Adress- oder Namensinformation zum Reserve- oder Haupt-Steuerungsgerät durch Auslesen der DCP-Variable, die auf das Reserve- oder Haupt-Steuerungsgerät verweist, oder durch Auslesen des DNS Resource Record, der auf das Reserve- oder Haupt-Steuerungsgerät verweist, bereitgestellt wird.

Die vorliegende Erfindung wird nachfolgend an einem Ausführungsbeispiel anhand der Zeichnung näher erläutert. Es zeigt
- Figur 1: ein industrielles Automatisierungssystem mit einer Bedien- und Überwachungsstation und einer ersten Variante einer hochverfügbaren Steuerung, die zwei redundant betriebene speicherprogrammierbare Steuerungen umfasst,
- Figur 2: ein industrielles Automatisierungssystem mit einer Bedien- und Überwachungsstation und einer zweiten Variante einer hochverfügbaren Steuerung.

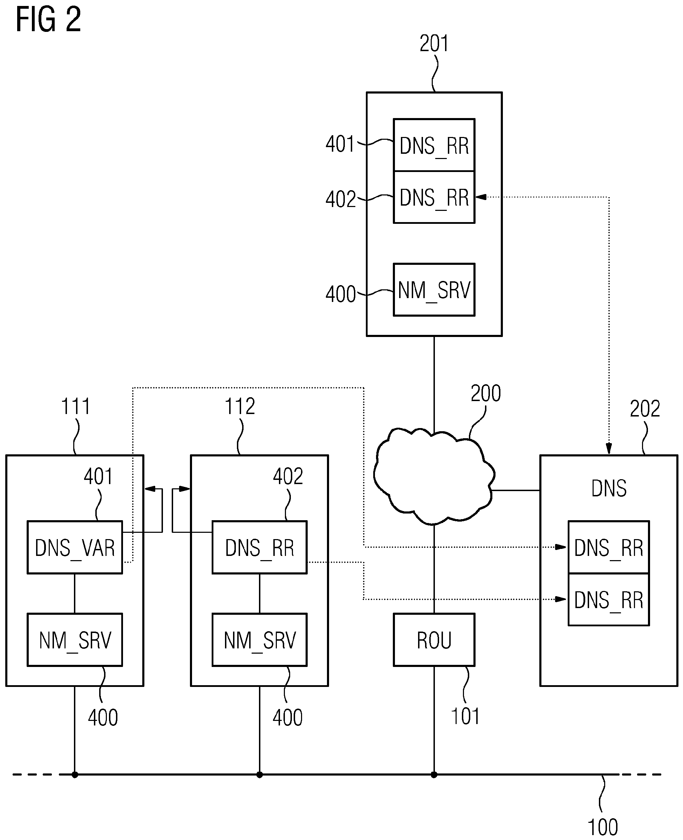

Das in Figur 1 dargestellte industrielle Automatisierungssystem umfasst eine Bedien- und Überwachungsstation 130, die als HMI-System (Human-Machine Interface) ausgestaltet und über ein lokales Kommunikationsnetz 100 mit einer ersten 111 und einer zweiten speicherprogrammierbaren Steuerung 112 verbunden ist, die redundant zueinander betrieben werden und gemeinsam eine hochverfügbare Steuerung bilden. Die beiden speicherprogrammierbaren Steuerungen 111, 112 sind identisch ausgestaltet und umfassen eine nicht näher in Figur 1 dargestellte Steuerungseinheit zur Steuerung oder Regelung eines technischen Prozesses. Diese Steuerungseinheit kann zwischen einem aktiven Betriebszustand und einem Reserve-Betriebszustand umgeschaltet werden. Eine speicherprogrammierbare Steuerung in einem Reserve-Betriebszustand simuliert die Steuerung oder Regelung des technischen Prozesses, der durch die speicherprogrammierbare Steuerung im aktiven Betriebszustand gesteuert oder geregelt wird. Dabei erfolgt eine Simulation mit einem vorgegebenen Zeitverzug bzw. Schlupf zu einer Steuerung oder Regelung eines technischen Prozesses.

Darüber hinaus umfassen die speicherprogrammierbaren Steuerungen 111, 112 jeweils eine Speichereinheit 301, 302, in der ein symbolischer Name eines zugeordneten Haupt-Steuerungsgeräts, das in einem aktiven Betriebszustand ist, bzw. Reserve-Steuerungsgeräts gespeichert ist. Im vorliegenden Ausführungsbeispiel ist in der Speichereinheit 301 der ersten speicherprogrammierbaren Steuerung 111 ein symbolischer Name der zweiten speicherprogrammierbaren Steuerung 112 gespeichert. In entsprechender Weise ist in der Speichereinheit 302 der zweiten speicherprogrammierbaren Steuerung 112 ein symbolischer Name der ersten speicherprogrammierbaren Steuerung 111 gespeichert. Die symbolischen Namen können beispielsweise im Rahmen einer Projektierung in die Speichereinheiten 301, 302 geschrieben werden.

Durch beide speicherprogrammierbare Steuerungen 111, 112 werden jeweils Informationen über Zuordnungen zwischen Gerätenamen und Kommunikationsnetzadressen entsprechend Discovery and Basic Configuration Protocol (DCP) innerhalb des lokalen Kommunikationsnetzes 100 bereitgestellt. Hierzu umfassen die beiden speicherprogrammierbaren Steuerungen 111, 112 jeweils eine Dienstkomponente 300 für das Discovery and Basic Configuration Protocol. Auch die Bedien- und Überwachungsstation 130 umfasst eine Dienstkomponente 300 für das Discovery and Basic Configuration Protocol. Im vorliegenden Ausführungsbeispiel sind die Kommunikationsnetzadressen der ersten 111 und der zweiten speicherprogrammierbaren Steuerung IPv6-Adressen, die durch die erste 111 bzw. die zweite speicherprogrammierbare Steuerung 112 jeweils selbständig erzeugt werden.

Zusätzlich sind beide speicherprogrammierbare Steuerungen 111, 112 dazu ausgestaltet und eingerichtet, dass bei Abruf einer Adress- oder Namensinformation eines Haupt- oder Reserve-Steuerungsgeräts automatisch eine korrespondierende Adress-oder Namensinformation für einen Aufbau einer Kommunikationsverbindung zu einem zugeordneten Reserve- bzw. Haupt-Steuerungsgerät anhand des jeweiligen symbolischen Namens bereitgestellt wird. Ein Abruf einer Adress- oder Namensinformation kann beispielsweise durch die Bedien- und Überwachungsstation 130 initiiert werden.

Da bei der in Figur 1 dargestellten ersten Variante einer hochverfügbaren Steuerung das Discovery and Basic Configuration Protocol zur Bereitstellung von Informationen über Zuordnungen zwischen Gerätenamen und Kommunikationsnetzadressen verwendet wird, werden die symbolischen Namen in den Speichereinheiten 301, 302 der speicherprogrammierbaren Steuerungen 111, 112 jeweils in DCP-Variablen entsprechend Discovery and Basic Configuration Protocol hinterlegt. Diese DCP-Variablen werden mittels korrespondierender Dienstkomponenten 300 für das Discovery and Basic Configuration Protocol an weitere Automatisierungs- oder Kommunikationsgeräte, wie die Bedien- und Überwachungsstation 130, bereitgestellt.

Bei einer Identifizierung einer der beiden speicherprogrammierbaren Steuerungen 111, 112 mittels Discovery and Basic Configuration Protocol wird automatisch die dort hinterlegte DCP-Variable ausgelesen wird, in welcher der symbolische Name der jeweils anderen speicherprogrammierbaren Steuerung 111, 112 gespeichert ist. Wählt beispielsweise ein Benutzer an der Bedien- und Überwachungsstation eine der beiden speicherprogrammierbaren Steuerungen 111, 112 über eine "Lifelist" oder durch Eingabe ihres Namens aus, liest die Bedien- und Überwachungsstation 130 automatisch eine zugehörige Referenz aus der jeweiligen DCP-Variable aus, die auf die jeweils andere speicherprogrammierbare Steuerung 111, 112 verweist. Vorteilhafterweise kann anhand dieser Referenz eine Kommunikationsverbindung, beispielsweise entsprechend Transmission Control Protocol, zu der speicherprogrammierbaren Steuerung 111, 112 aufgebaut werden, die im aktiven Betriebszustand ist, ohne dass der Benutzer wissen muss, welche speicherprogrammierbare Steuerung aktuell im aktiven Betriebszustand bzw. im Reserve-Betriebszustand ist.

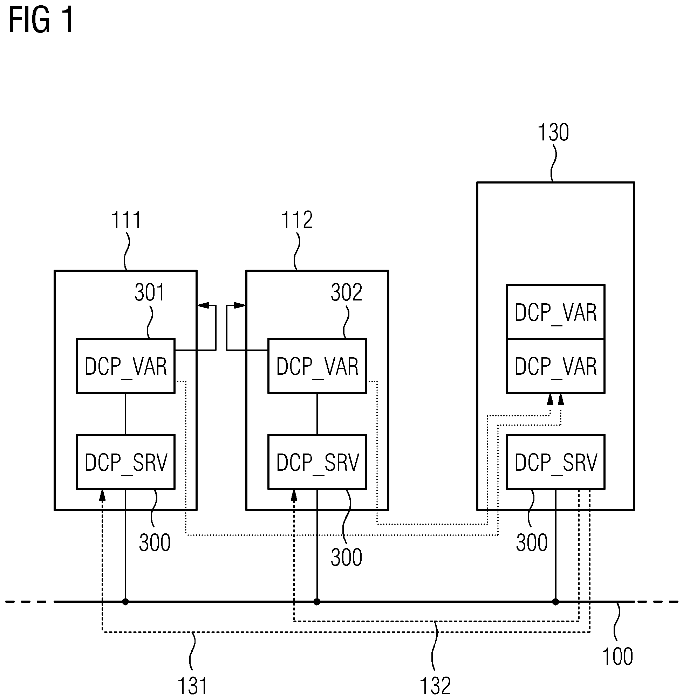

Im Unterschied zu der in Figur 1 dargestellten ersten Variante einer hochverfügbaren Steuerung werden die Informationen über Zuordnungen zwischen Gerätenamen und Kommunikationsnetzadressen der beiden speicherprogrammierbaren Steuerungen 111, 112 bei der in Figur 2 dargestellten zweiten Variante mittels eines Domain Name System bzw. entsprechend Multicast DNS Protokoll bereitgestellt. Außerdem befindet sich die Bedien- und Überwachungsstation 201 nicht mehr im selben lokalen Kommunikationsnetz 100 wie die beiden speicherprogrammierbaren Steuerungen 111, 112, sondern ist nun über ein Transportnetz 200 und einen Router 101 mit den beiden speicherprogrammierbaren Steuerungen 111, 112 verbunden. Über das Transportnetz 200 ist außerdem ein DNS-Server 202 (Domain Name System) sowohl mit den beiden speicherprogrammierbaren Steuerungen 111, 112 als auch mit der Bedien- und Überwachungsstation 201 verbunden.

Entsprechend Figur 2 weisen beide speicherprogrammierbare Steuerungen 111, 112 jeweils eine Dienstkomponente 400 für dynamisches DNS bzw. Multicast DNS (mDNS) auf, mittels der sie neben Informationen über ihren eigenen Gerätenamen und ihre eigene Kommunikationsnetzadresse den symbolischen Namen verbreiten, welcher der jeweils anderen speicherprogrammierbaren Steuerung 111, 112 zugeordnet ist. Aus diesem Grund werden die in den Speichereinheiten 401, 402 gespeicherten symbolischen Namen der jeweils anderen speicherprogrammierbaren Steuerung 111, 112 DNS Resource Records hinterlegt, die neben den Informationen über Zuordnungen zwischen Gerätenamen und Kommunikationsnetzadressen der beiden speicherprogrammierbaren Steuerungen 111, 112 zunächst an den DNS-Server 202 übermittelt und dort abrufbar gespeichert werden. Die symbolischen Namen der jeweils anderen speicherprogrammierbaren Steuerung 111, 112 werden also im DNS-Server 202 als zusätzliche Resource Records gespeichert werden, die bei einer Adress- oder Namensauflösungsanfrage als zusätzliche Informationen bereitgestellt werden.

Auch die Bedien- und Überwachungsstation 201 umfasst entsprechend Figur 2 eine Namensdienstkomponente 400, die beispielsweise als Standard-konformer DNS-Stub-Resolver ausgestaltet sein kann. Befände sich die Bedien- und Überwachungsstation im selben lokalen Kommunikationsnetz 100 wie die beiden speicherprogrammierbaren Steuerungen 111, 112 könnte die Namensdienstkomponente 400 der Bedien- und Überwachungseinheit 201 als mDNS-Peer ausgestaltet sein; der DNS-Server 202 wäre in diesem Fall lediglich optional.

Sobald ein Benutzer an der Bedien- und Überwachungsstation 201 außerhalb des lokalen Kommunikationsnetzes 100 eine der beiden speicherprogrammierbaren Steuerungen 111, 112 beispielsweise über eine Domänen-Service-Liste oder durch Eingabe ihres Namens identifiziert, liest die Bedien- und Überwachungsstation 201 automatisch den korrespondierenden Resource Record aus, der auf die jeweils andere speicherprogrammierbare Steuerung 111, 112 verweist. Auf diese Weise kann automatisch eine Kommunikationsverbindung zum jeweils aktuellen Haupt-Steuerungsgerät aufgebaut werden, ohne dass dieses dem Benutzer an der Bedien- und Überwachungsstation 201 explizit als solches bekannt sein muss.

## Patentansprüche

1. Verfahren zum Aufbau von Kommunikationsverbindungen zu redundant betriebenen Steuerungsgeräten eines industriellen Automatisierungssystems, bei dem
- ein erstes Steuerungsgerät (111) in einem aktiven Betriebszustand zur Steuerung oder Regelung eines technischen Prozesses ist,
- ein zweites Steuerungsgerät (112) in einem Reserve-Betriebszustand ist, aus dem es bei einem Ausfall des ersten Steuerungsgeräts in einen aktiven Betriebszustand versetzbar ist,
- im ersten Steuerungsgerät (111) ein dem zweiten Steuerungsgerät (112) zugeordneter symbolischer Gerätename gespeichert wird,
- im zweiten Steuerungsgerät (112) ein dem ersten Steuerungsgerät (111) zugeordneter symbolischer Gerätename gespeichert wird,
- die symbolischen Gerätenamen jeweils in DCP-Variablen entsprechend Discovery and Basic Configuration Protocol oder als zusätzliche DNS Ressource Records im jeweils anderen Steuerungsgerät (111, 112) gespeichert werden,
- Informationen über Zuordnungen zwischen Gerätenamen und Kommunikationsnetzadressen des ersten und des zweiten Steuerungsgeräts entsprechend einem Namensdienstprotokoll zumindest innerhalb eines dem ersten und/oder zweiten Steuerungsgerät zugeordneten Teilnetzes (100) bereitgestellt werden,
- bei Abruf einer Adress- oder Namensinformation eines der beiden Steuerungsgeräte (111, 112) automatisch eine Adress-oder Namensinformation für einen Aufbau einer Kommunikationsverbindung zum jeweils anderen Steuerungsgerät anhand des jeweiligen symbolischen Gerätenamens bereitgestellt wird,
- der Abruf der Adress- oder Namensinformation im Rahmen einer Benutzerauswahl oder -identifizierung eines der beiden Steuerungsgeräte (111, 112) erfolgt,
- die Adress- oder Namensinformation zum jeweils anderen Steuerungsgerät (111, 112) durch Auslesen der DCP-Variable, die auf das jeweils andere Steuerungsgerät verweist, oder durch Auslesen des DNS Ressource Record, der auf das jeweils andere Steuerungsgerät verweist, bereitgestellt wird,
- anhand des jeweiligen symbolischen Gerätenamens eine Kommunikationsverbindung zu dem Steuerungsgerät aufgebaut wird, das im aktiven Betriebszustand ist.

2. Verfahren nach Anspruch 1,
bei dem die Kommunikationsnetzadressen des ersten und des zweiten Steuerungsgeräts IPv6-Adressen sind, und bei dem das erste und das zweite Steuerungsgerät jeweils selbständig ihre IPv6-Adressen erzeugen.

3. Verfahren nach einem der Ansprüche 1 oder 2,
bei dem die Informationen über Zuordnungen zwischen Gerätenamen und Kommunikationsnetzadressen des ersten und des zweiten Steuerungsgeräts entsprechend Discovery and Basic Configuration Protocol bereitgestellt werden.

4. Verfahren nach Anspruch 3,
bei dem die im ersten Steuerungsgerät und im zweiten Steuerungsgerät gespeicherten DCP-Variablen entsprechend Discovery and Basic Configuration Protocol mittels korrespondierender Dienstkomponenten für das Discovery and Basic Configuration Protocol an weitere Automatisierungs- oder Kommunikationsgeräte bereitgestellt werden.

5. Verfahren nach Anspruch 4,
bei dem bei einer Identifizierung des ersten Steuerungsgeräts mittels Discovery and Basic Configuration Protocol automatisch die dort hinterlegte DCP-Variable ausgelesen wird, in welcher der dem zweiten Steuerungsgerät zugeordnete symbolische Gerätename gespeichert ist, und bei dem bei einer Identifizierung des zweiten Steuerungsgeräts mittels Discovery and Basic Configuration Protocol automatisch die dort hinterlegte DCP-Variable ausgelesen wird, in welcher der dem ersten Steuerungsgerät zugeordnete symbolische Gerätename gespeichert ist.

6. Verfahren nach einem der Ansprüche 1 oder 2,
bei dem die Informationen über Zuordnungen zwischen Gerätenamen und Kommunikationsnetzadressen des ersten und des zweiten Steuerungsgeräts mittels eines Domain Name System und/oder entsprechend Multicast DNS Protokoll bereitgestellt werden.

7. Verfahren nach einem der Ansprüche 1 bis 6,
bei dem das erste und das zweite Steuerungsgerät jeweils eine Dienstkomponente für dynamisches DNS oder für Multicast DNS umfassen, mittels der sie neben Informationen über ihren eigenen Gerätenamen und ihre eigene Kommunikationsnetzadresse den symbolischen Gerätenamen verbreiten, der dem jeweils anderen Steuerungsgerät zugeordnet ist.

8. Verfahren nach Anspruch 7,
bei dem neben den Informationen über Zuordnungen zwischen Gerätenamen und Kommunikationsnetzadressen des ersten und des zweiten Steuerungsgeräts die symbolischen Gerätenamen in zumindest einem DNS-Server abrufbar gespeichert werden.

9. Verfahren nach Anspruch 8,
bei dem die symbolischen Gerätenamen im DNS-Server als zusätzliche Resource Records gespeichert werden, die bei einer Adress- oder Namensauflösungsanfrage als zusätzliche Informationen bereitgestellt werden.

10. Verfahren nach einem der Ansprüche 1 bis 9,
bei dem anhand eines symbolischen Gerätenamens eine Kommunikationsnetzadresse für einen Aufbau einer Kommunikationsverbindung zu einem Steuerungsgerät ermittelt wird, und bei dem die Kommunikationsverbindung entsprechend Transmission Control Protocol aufgebaut wird.

11. Verfahren nach einem der Ansprüche 1 bis 10,
bei dem ein Steuerungsgerät in einem Reserve-Betriebszustand die Steuerung oder Regelung des technischen Prozesses simuliert, der durch das Steuerungsgerät im aktiven Betriebszustand gesteuert oder geregelt wird.

12. Verfahren nach Anspruch 11,
bei dem eine Simulation mit einem vorgegebenen Zeitverzug zu einer Steuerung oder Regelung eines technischen Prozesses erfolgt.

13. Steuerungsgerät eines industriellen Automatisierungssystems zur Durchführung eines Verfahrens nach einem der Ansprüche 1 bis 12 mit
- einer Steuerungseinheit zur Steuerung oder Regelung eines technischen Prozesses, wobei die Steuerungseinheit dazu ausgestaltet und eingerichtet ist, zwischen einem aktiven Betriebszustand und einem Reserve-Betriebszustand umgeschaltet zu werden,
- einer Speichereinheit (301, 302), in der ein symbolischer Gerätename eines zugeordneten Haupt- oder Reserve-Steuerungsgeräts in einer DCP-Variable entsprechend Discovery and Basic Configuration Protocol oder als zusätzlicher DNS Ressource Record gespeichert ist,
- wobei das Steuerungsgerät dazu ausgestaltet und eingerichtet ist, dass Informationen über Zuordnungen zwischen Gerätenamen und Kommunikationsnetzadressen entsprechend einem Namensdienstprotokoll zumindest innerhalb eines zugeordneten Teilnetzes bereitgestellt werden,
- wobei das Steuerungsgerät zusätzlich dazu ausgestaltet und eingerichtet ist, dass bei Abruf einer Adress- oder Namensinformation eines Haupt- oder Reserve-Steuerungsgeräts automatisch eine Adress-oder Namensinformation für einen Aufbau einer Kommunikationsverbindung zu einem zugeordneten Reserve- oder Haupt-Steuerungsgerät anhand des jeweiligen symbolischen Gerätenamens bereitgestellt wird, wobei der Abruf der Adress- oder Namensinformation im Rahmen einer Benutzerauswahl oder -identifizierung des Reserve- oder Haupt-Steuerungsgeräts erfolgt,
- wobei das Steuerungsgerät zusätzlich dazu ausgestaltet und eingerichtet ist, dass die Adress- oder Namensinformation zum Reserve- oder Haupt-Steuerungsgerät durch Auslesen der DCP-Variable, die auf das Reserve- oder Haupt-Steuerungsgerät verweist, oder durch Auslesen des DNS Ressource Record, der auf das Reserve- oder Haupt-Steuerungsgerät verweist, bereitgestellt wird.

## Claims

1. Method for setting up communication links to redundantly operated controllers in an industrial automation system, in which
- a first controller (111) is in an active operating state for controlling or regulating a technical process,
- a second controller (112) is in a reserve operating state, from which it can be put into an active operating state in the event of failure of the first controller,
- the first controller (111) is used to store a symbolic device name associated with the second controller (112),
- the second controller (112) is used to store a symbolic device name associated with the first controller (111),
- the symbolic device names are each stored in DCP variables in accordance with Discovery and Basic Configuration Protocol or as additional DNS resource records in the other controller (111, 112),
- information about associations between device names and communication network addresses of the first and second controllers is provided in accordance with a name service protocol at least within a subnetwork (100) associated with the first and/or second controller,
- retrieval of a piece of address or name information for one of the two controllers (111, 112) involves automatic provision of a piece of address or name information for setup of a communication link to the other controller on the basis of the respective symbolic device name,
- the retrieval of the address or name information is effected in the course of a user selection or identification of one of the two controllers (111, 112),
- the address or name information pertaining to the other controller (111, 112) is provided by reading the DCP variable that refers to the other controller or by reading the DNS resource record that refers to the other controller,
- the respective symbolic device name is taken as a basis for setting up a communication link to the controller that is in the active operating state.

2. Method according to Claim 1,
in which the communication network addresses of the first and second controllers are IPv6 addresses, and in which the first and second controllers each generate their IPv6 addresses independently.

3. Method according to either of Claims 1 and 2,
in which the information about associations between device names and communication network addresses of the first and second controllers is provided in accordance with Discovery and Basic Configuration Protocol.

4. Method according to Claim 3,
in which the DCP variables stored in the first controller and in the second controller are provided in accordance with Discovery and Basic Configuration Protocol for further automation or communication devices by means of corresponding service components for the Discovery and Basic Configuration Protocol.

5. Method according to Claim 4,
in which identification of the first controller by means of Discovery and Basic Configuration Protocol involves automatic reading of the DCP variable stored therein, which stores the symbolic device name associated with the second controller, and in which identification of the second controller by means of Discovery and Basic Configuration Protocol involves automatic reading of the DCP variable stored therein, which stores the symbolic device name associated with the first controller.

6. Method according to either of Claims 1 and 2,
in which the information about associations between device names and communication network addresses of the first and second controllers is provided by means of a Domain Name System and/or in accordance with Multicast DNS protocol.

7. Method according to one of Claims 1 to 6,
in which the first and second controllers each comprise a service component for dynamic DNS or for multicast DNS that they use to disseminate not only information about their own device name and their own communication network address but also the symbolic device name that is associated with the other controller.

8. Method according to Claim 7,
in which besides the information about associations between device names and communication network addresses of the first and second controllers, the symbolic device names are retrievably stored in at least one DNS server.

9. Method according to Claim 8,
in which the symbolic device names are stored in the DNS server as additional resource records, which are provided as additional information for an address or name resolution inquiry.

10. Method according to one of Claims 1 to 9,
in which a symbolic device name is used to ascertain a communication network address for setup of a communication link to a controller, and in which the communication link is set up in accordance with Transmission Control Protocol.

11. Method according to one of Claims 1 to 10,
in which a controller in a reserve operating state simulates the control or regulation of the technical process that is controlled or regulated by the controller in the active operating state.

12. Method according to Claim 11,
in which a simulation is effected with a prescribed time delay in relation to control or regulation of a technical process.

13. Controller in an industrial automation system for performing a method according to one of Claims 1 to 12, having
- a control unit for controlling or regulating a technical process, wherein the control unit is embodied and configured to be changed over between an active operating state and a reserve operating state,
- a memory unit (301, 302) that stores a symbolic device name for an associated main or reserve controller in a DCP variable in accordance with Discovery and Basic Configuration Protocol or as an additional DNS resource record,
- wherein the controller is embodied and configured to provide information about associations between device names and communication network addresses in accordance with a name service protocol at least within an associated subnetwork,
- wherein the controller is additionally embodied and configured to prompt retrieval of a piece of address or name information for a main or reserve controller to involve automatic provision of a piece of address or name information for setup of a communication link to an associated reserve or main controller on the basis of the respective symbolic device name, wherein the retrieval of the address or name information is effected in the course of a user selection or identification of the reserve or main controller,
- wherein the controller is additionally embodied and configured to prompt the address or name information pertaining to the reserve or main controller to be provided by reading the DCP variable that refers to the reserve or main controller or by reading the DNS resource record that refers to the reserve or main controller.

## Revendications

1. Procédé d'établissement de liaisons de communication à des appareils de commande à fonctionnement redondant, le système d'automatisation industriel, dans lequel
- un premier appareil (111) de commande est dans un état de fonctionnement actif pour commander ou réguler un processus technique,
- un deuxième appareil (112) de commande est dans un état de fonctionnement de réserve, dont il peut passer, si le premier appareil de commande est défaillant, dans un état de fonctionnement actif,
- on mémorise, dans le premier appareil (111) de commande, une dénomination d'appareil symbolique affectée au deuxième appareil (112) de commande,
- on mémorise, dans le deuxième appareil (112) de commande, une dénomination d'appareil symbolique affectée au premier appareil (111) de commande,
- on mémorise les dénominations d'appareil symboliques respectivement dans des variables DCP, conformément au protocole Discovery and Basic Configuration ou comme DNS Ressource Records supplémentaires dans respectivement l'autre appareil (111, 112) de commande,
- on procure des informations sur des affectations entre des dénominations d'appareil et des adresses de réseau de communication du premier et du deuxième appareil de commande, conformément à un protocole de service de dénomination, au moins au sein d'un sous-réseau (100) affecté au premier et/ou au deuxième appareil de commande,
- si une information d'adresse ou de dénomination de l'un des deux appareils (111, 112) de commande est demandée, on met automatiquement une information d'adresse ou de dénomination pour l'établissement d'une liaison de communication à disposition de respectivement l'autre appareil de commande, à l'aide de la dénomination d'appareil symbolique respective,
- la demande de l'information d'adresse ou de dénomination s'effectue dans le cadre d'un choix de l'utilisateur ou d'une identification de l'utilisateur de l'un des deux appareils (111, 112) de commande,
- on procure l'information d'adresse ou de dénomination à respectivement l'autre appareil (111, 112) de commande, par lecture de la variable DCP, qui se rapporte à respectivement l'autre appareil de commande ou par lecture du DNS Ressource Record, qui se rapporte à respectivement l'autre appareil de commande,
- à l'aide de la dénomination d'appareil symbolique respective, on établit une liaison de communication à l'appareil de commande, qui est dans l'état de fonctionnement actif.

2. Procédé suivant la revendication 1,
dans lequel les adresses de réseau de communication du premier et du deuxième appareil de commande sont des adresses IPv6 et dans lequel le premier et le deuxième appareil de commande produisent chacun automatiquement leur adresse IPv6.

3. Procédé suivant l'une des revendications 1 ou 2,
dans lequel on procure les informations sur des affectations entre dénominations d'appareil et adresses de réseau de communication du premier et du deuxième appareil de commande, conformément au protocole Discovery and Basic Configuration.

4. Procédé suivant la revendication 3,
dans lequel on met à disposition d'autres appareils d'automatisation ou de communication les variables DCP mémorisées dans le premier appareil de commande et dans le deuxième appareil de commande, conformément au protocole Discovery and Basic Configuration, au moyen de composants de service correspondants pour le protocole Discovery and Basic Configuration.

5. Procédé suivant la revendication 4,
dans lequel, lors d'une identification du premier appareil de commande au moyen du protocole Discovery and Basic Configuration, on lit automatiquement la variable DCP, qui y est mémorisée, dans laquelle la dénomination d'appareil symbolique affectée au deuxième appareil de commande est mémorisée et dans lequel, lors d'une identification du deuxième appareil de commande au moyen du protocole Discovery and Basic Configuration, on lit automatiquement la variable DCP, qui y est mémorisée, dans laquelle la dénomination d'appareil symbolique affectée au deuxième appareil de commande est mémorisée.

6. Procédé suivant l'une des revendications 1 ou 2,
dans lequel procure les informations sur des affectations entre des dénominations d'appareil et les adresses du réseau de communication du premier et du deuxième appareil de commande, au moyen d'un Domain Name System et/ou conformément au protocole Multicast DNS.

7. Procédé suivant l'une des revendications 1 à 6,
dans lequel le premier et le deuxième appareils de commande comprennent chacun un composant de service pour un DNS dynamique ou pour Multicast DNS, au moyen desquels ils diffusent, outre des informations sur leurs propres dénominations d'appareils et leurs propres adresses de réseau de communication, la dénomination d'appareil symbolique, qui est affectée respectivement à l'autre appareil de commande.

8. Procédé suivant la revendication 7,
dans lequel on mémorise, avec possibilité de les demander, outre les informations sur des affectations entre dénominations d'appareil et adresses de réseau de communication du premier et du deuxième appareils de commande, les dénominations d'appareil symboliques dans au moins un serveur DNS.

9. Procédé suivant la revendication 8,
dans lequel on mémorise les dénominations d'appareil symboliques dans le serveur DNS, comme Resource Records supplémentaires, que l'on met à disposition, comme informations supplémentaires, s'il y a une demande de résolution d'adresse ou de dénomination.

10. Procédé suivant l'une des revendications 1 à 9,
dans lequel, à l'aide d'une dénomination d'appareil symbolique, on détermine une adresse de réseau de communication pour l'établissement d'une liaison de communication à un appareil de commande et dans lequel on établit la liaison de communication, conformément au protocole Transmission Control.

11. Procédé suivant l'une des revendications 1 à 10,
dans lequel un appareil de commande, dans un état de fonctionnement de réserve, simule la commande ou la régulation du processus technique, qui est commandé ou régulé par l'appareil de commande dans l'état de fonctionnement actif.

12. Procédé suivant la revendication 11,
dans lequel une simulation, avec un retard dans le temps donné à l'avance, est effectuée.

13. Appareil de commande d'un système d'automatisation industriel pour effectuer un procédé suivant l'une des revendications 1 à 12, comprenant
- une unité de commande pour commander ou réguler un processus technique, l'unité de commande étant conformée et conçue pour passer entre un état de fonctionnement actif et un état de fonctionnement de réserve,
- une unité (301, 302) de mémoire, dans laquelle une dénomination d'appareil symbolique d'un appareil de commande associé principal ou de réserve est mémorisée dans une variable DCP, conformément au protocole Discovery and Basic Configuration ou comme DNS Ressource Record supplémentaire,
- dans lequel l'appareil de commande est conformé et conçu pour que des informations sur des affectations entre des dénominations d'appareil et des adresses de réseau de communication soient procurées, conformément à un protocole de service de dénomination au moins au sein d'un sous-réseau affecté,
- dans lequel l'appareil de commande est, en outre, conformé et conçu pour, si une information d'adresse ou de dénomination d'un appareil de commande principal ou de réserve est demandée, procurer automatiquement, à l'aide de la dénomination d'appareil symbolique respective, à disposition une information d'adresse ou de dénomination pour l'établissement d'une liaison de communication à un appareil de commande de réserve ou principal affecté, la demande de l'information d'adresse ou de dénomination s'effectuant dans le cadre d'un choix d'utilisateur ou d'une identification d'utilisateur de l'appareil de commande de réserve ou principal,
- dans lequel l'appareil de commande est conformé et conçu, en outre, de manière à procurer l'information d'adresse ou de dénomination à disposition de l'appareil de commande de réserve principal par lecture de la variable DCP, qui se rapporte à l'appareil de commande de réserve ou principal ou par lecture du DNS Ressource Record, qui se rapporte à l'appareil de commande de réserve ou principal.
